(19) Europäisches Patentamt
European Patent Office
Office européen des brevets

(11) EP 2 058 347 B1

(12) **EUROPEAN PATENT SPECIFICATION**

(45) Date of publication and mention of the grant of the patent:
**14.09.2011 Bulletin 2011/37**

(21) Application number: **07829621.7**

(22) Date of filing: **11.10.2007**

(51) Int Cl.:
***C08G 18/34*** (2006.01) ***C08G 18/10*** (2006.01)
***C08G 18/48*** (2006.01) ***C08G 18/83*** (2006.01)
***C08G 73/10*** (2006.01) ***C08G 73/14*** (2006.01)

(86) International application number:
**PCT/JP2007/069883**

(87) International publication number:
**WO 2008/050614 (02.05.2008 Gazette 2008/18)**

(54) **POLYIMIDE RESIN**

POLYIMIDHARZ

RÉSINE DE POLYIMIDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.10.2006 JP 2006288268**

(43) Date of publication of application:
**13.05.2009 Bulletin 2009/20**

(73) Proprietors:
- **Nitta Corporation**
  **Osaka-shi, Osaka 556-0022 (JP)**
- **INOUE**
  **Shinichi**
  **Tokoname-shi, Aichi 479-0834 (JP)**

(72) Inventors:
- **INOUE, Shinichi**
  **Tokoname-shi**
  **Aichi 479-0834 (JP)**
- **NISHIO, Tomohiro**
  **Yamatokohriyama-shi**
  **Nara 639-1085 (JP)**
- **INOUE, Kiyotaka**
  **Yamatokohriyama-shi**
  **Nara 639-1085 (JP)**

(74) Representative: **Ackroyd, Robert**
**W.P. Thompson & Co.**
**55 Drury Lane**
**London**
**WC2B 5SQ (GB)**

(56) References cited:
**EP-A1- 1 048 680**
**EP-A1- 1 496 078**
**WO-A1-2006/028289**
**JP-A- 11 199 669**
**JP-A- 2002 145 981**
**JP-A- 2004 269 895**
**JP-A- 2006 104 462**
**US-A- 4 160 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a polyimide resin having excellent pliability and flexibility.

BACKGROUND ART

Polyimide resins are known as engineering plastic and have excellent physical strengths, thermal resistance and the like. Therefore recently, the polyimide resins are in rapidly increasing demand for various applications such as electrical and electronic equipments, automobile parts, aeronautics and space industry, and office equipment. In general, the polyimide resins can be obtained by subjecting polyamic acid synthesized from tetracarboxylic dianhydride and a diamine compound to imidization by heat and a catalyst.
Although the polyimide resins thus obtained have excellent strength and thermal resistance, the resin structure thereof is rigid and hence there are the drawbacks of poor pliability and poor flexibility. For example, when the polyimide resin having poor pliability and flexibility is made into a sheet or a film, the sheet or the film might warp. For example, when applied to a belt, cracks or breakage might occur in the belt in the middle of driving. Especially, these problems become noticeable because small pulleys are often used to cope with small-sized and highspeed equipments (for example, refer to Patent Documents 1 and 2). Consequently, there has been a desire for a polyimide resin having more excellent pliability and flexibility than the related art polyimide resin.
As a polyimide resin having excellent pliability and flexibility, for example, Patent Document 3 describes a modified polyimide resin obtained by reacting a diisocyanate compound, at least one kind of diol compounds containing a bifunctional hydroxy-terminated polybutadiene, and a bifunctional hydroxy-terminated imide oligomer represented by a predetermined chemical formula. Patent Document 4 describes a polyimide resin composition containing a polyimide resin having repeating units represented by a predetermined general formula. These two documents describe that their respective polyimide resins have excellent pliability and flexibility.
However, the fact is that even these polyimide resins described in Patent Documents 3 and 4 may or may not provide sufficient pliability and flexibility. Consequently, there has still been a desire for polyimide resin having more excellent pliability and flexibility.
Patent Document 5 describes a polyimide resin obtained by reacting a tetracarboxylic dianhydride with a polyurethane prepolymer having polybutadiene segments. However, the polyurethane prepolymer is not chain-extended with a amine and therefore no polyurethane-urea intermediate is used in the formation of the polyimide.

Patent Document 1: Japanese Unexamined Patent Publication No. 2006-133510, particularly page 2, lines 16 to 23 in the right column
Patent Document 2: Japanese Unexamined Patent Publication No. 2006-243146, particularly page 2, lines 3 to 8 in the right column
Patent Document 3: Japanese Unexamined Patent Publication No. 2006-104462
Patent Document 4: Japanese Unexamined Patent Publication No. 2005-036025
Patent Document 5: European Patent Publication No.1 048 680.

DISCLOSURE OF THE INVENTION

PROBLEMS TO BE SOLVED BY THE INVENTION

It is desirable to provide a new polyimide resin having excellent pliability and flexibility.

MEANS FOR SOLVING THE PROBLEMS

According to the invention, there is provided a polyimide resin represented by a general formula (I):

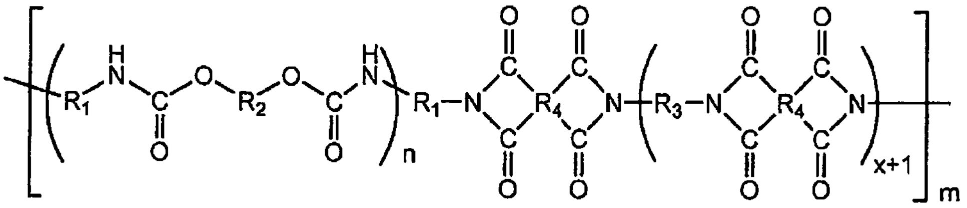 (I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; m represents an integer of 2 to 100; and x represents an integer of 1 to 50. The polyimide resin of the invention is a new compound described nowhere.

EFFECT OF THE INVENTION

In the polyimide resin represented by the general formula (I), polyurethane is contained as an elastomer component, and successive imide units can be introduced into a main chain at a desired ratio (imide fraction,) while controlling the distribution thereof, making it easy to adjust the elastic modulus thereof to a desired value. This achieves the polyimide resin having excellent pliability and flexibility while retaining strength and thermal resistance.

BRIEF DESCRIPTION OF THE DRAWINGS

Fig. 1 is-the IR spectrum of the polyimide resin (1) obtained in Synthesis Example 1;
Fig. 2 is the IR spectrum of the polyimide resin (2) obtained in Synthesis Example 2;
Fig. 3 is a graph showing the tensile test results of Example 1; and
Fig.4 is a graph showing the dynamic viscoelasticity test results of Example 1.

PREFERRED EMBODIMENTS FOR CARRYING OUT THE INVENTION

The polyimide resin of the invention is represented by the above general formula (I). In this formula, the $R_1$ represents a divalent organic group having an aromatic ring or an aliphatic ring. Examples of the organic group include residues except for an isocyanate group (-NCO) in diisocyanate (a) capable of forming urethane prepolymer (c) together with polyol (b) according to a reaction formula (A) described later.

The $R_2$ represents a divalent organic group having a weight average molecular weight of 100 to 10,000, preferably 300 to 5,000. Examples of the organic group include residues except for two hydroxyl groups (-OH) in polyol (b) capable of forming urethane prepolymer (c) together with diisocyanate (a) according to the reaction formula (A).

The $R_3$ represents a divalent organic group having an aromatic ring, an aliphatic ring or an aliphatic chain. Examples of the organic group include residues except for an amino group ($-NH_2$) in at least one kind of diamine compounds selected from aromatic diamine compounds having a carbon number of 6 to 27, aliphatic diamine compounds having a carbon number of 6 to 24 and alicyclic diamine compounds having a carbon number of 6 to 24, each of which can chain extend urethane prepolymer (c) and diisocyanate (a) by urea bond according to a reaction formula (B) described later. Examples of the aliphatic chain include those having a carbon number of 1.

The $R_4$ represents a tetravalent organic group having 4 or more carbon atoms. Examples of the organic group include residues of at least one kind of tetracarboxylic dianhydride (f) selected from aromatic tetracarboxylic dianhydrides having a carbon number of 6 to 18 and alicyclic tetracarboxylic dianhydrides having a carbon number of 4 to 6, each of which can introduce an imide unit into a urea bond site according to a reaction formula (C) described later.
The n represents an integer of 1 to 100, preferably an integer of 2 to 50. The m represents an integer of 2 to 100, preferably an integer of 2 to 50. The x represents an integer of 1 to 50, preferably an integer of 1 to 30.

Specific examples of the polyimide resin represented by the general formula (I) (hereinafter also referred to as a "polyimide resin (I)") include polyimide resins represented by the following formula (1):

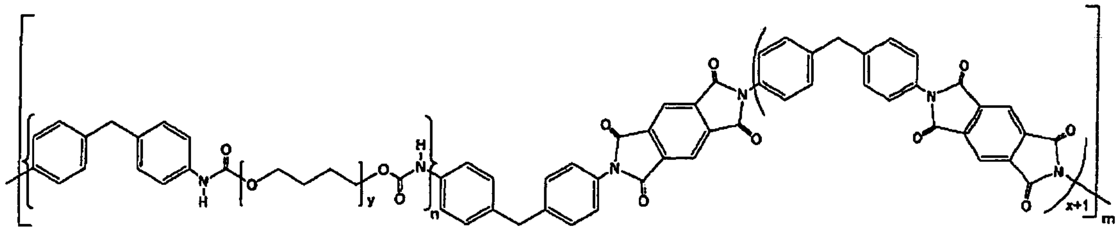

(1)

wherein, n represents an integer of 1 to 100; m represents an integer of 2 to 100; x represents an integer of 1 to 30; and y represents an integer of 10 to 100.

Preferably, the polyimide resin (I) is a block copolymer in which urethane prepolymer having an isocyanate group at both ends of each molecule obtained from diisocyanate and polyol, and diisocyanate are chain extended with a diamine compound by urea bond, and an imide unit is introduced into the urea bond site with tetracarboxylic dianhydride. This polyimide resin can be manufactured through, for example, the following reaction formulas (A) to (C).

<Reaction Formula (A)>

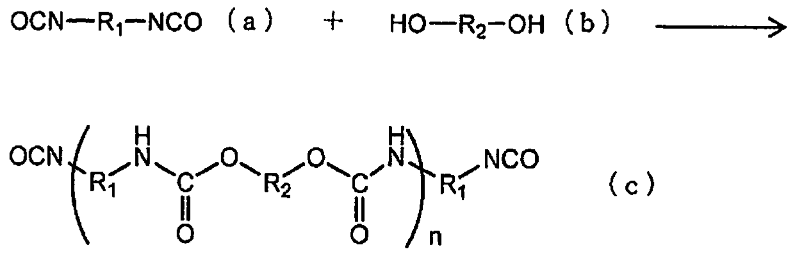

wherein, $R_1$, $R_2$ and n are the same as above.

<Synthesis of Urethane prepolymer (c)>

As shown in the reaction formula (A), firstly, urethane prepolymer (c) having an isocyanate group at both ends of the molecule thereof is obtained from diisocyanate (a) and polyol (b). Since the polyimide resin (I) of the invention employs the urethane prepolymer (c) as an elastomer component, the elastic modulus in the rubber-like region (around room temperature) is lowered to impart more elastic properties, and by controlling the molecular weight of the urethane prepolymer (c), successive imide units can be introduced into the main chain at a desired ratio while controlling the distribution thereof.

Examples of the diisocyanate (a) include 2,4-tolylenediisocyanate (TDI), 2,6-tolylenediisocyanate (TDI), 4,4'-diphenylmethanediisocyanate (MDI), polymeric MDI (Cr. MDI), dianisidine diisocyanate (DADL), diphenylether diisocyanate (PEDI), pitolylene diisocyanate (TODI), naphthalene diisocyanate (NDI), hexamethylene diisocyanate (HMDI), isophorone diisocyanate (IPDI), lysine diisocyanate methyl ester (LDI), methaxylene diisocyanate (MXDI), 2,2,4-trimethylhexamethylene diisocyanate (TMDI), 2,4,4- trimethylhexamethylene diisocyanate (TMDI), dimer acid diisocyanate (DDI), isopropylidenebis (4-cyclohexyl isocyanate) (IPCI), cyclohexylnethane diisocyanate (hydrogenated MDI), methylcyclobexane diisocyanate (hydrogenated TDI) and TDI dimer (TT). These may be used either singly or as a mixture of two or more selected therefrom. Preferably, these are subjected to vacuum distillation.

Examples of the polyol (b) include polyether polyols such as polypropylene glycol (PPG), poly(oxytetramethylene)glycol (PTMG) and polymer polyol; polyester polyols such as adipate based polyol (condensed polyester polyol) and polycaprolactone based polyol; polycarbonate polyol; polybutadiene polyol; and acryl polyol. These may be used either singly or as a mixture of two or more selected therefrom.

It is preferable to use the polyol (b) after being subjected to vacuum drying under the conditions of 70°C to 90°C, 1 to 5 mmHg and about 10 to 30 hours. The weight average molecular weight of the polyol (b) is 100 to 10,000, preferably 300 to 5,000. These weight average molecular weights are obtained by measuring the polyol (b) through gel permeation chromatography (GPC), and expressing the obtained measured value in terms of polystyrene.

The above-mentioned diisocyanate (a) and the polyol (b) are mixed in a predetermined ratio, and the mixture is then allowed to react at room temperature for about 1 to 5 hours under an inert gas atmosphere such as argon gas. The mixing ratio of the diisocyanate (a) to the polyol (b), (diisocyanate/polyol), is 2 or more, preferably 2 to 5. This allows the free diisocyanate (a) to exist within the reaction system in a reaction formula (B) described later, enabling the reaction to proceed efficiently.

The weight average molecular weight of the obtained urethane prepolymer (c) is 300 to 50,000, preferably 500 to 45,000. When the imide unit is introduced at a desired ratio while controlling the weight average molecular weight of the urethane prepolymer (c) within the above-mentioned range, it is capable of obtaining the polyimide resin (I) having excellent pliability and flexibility while retaining strength and thermal resistance.

More specifically, when the weight average molecular weight of the urethane prepolymer (c) is set at the above-mentioned predetermined range, the successive imide units can be introduced into the main chain at a desired ratio (imide fraction) while controlling the distribution thereof. That is, the imide fraction (the content of the imide component) of the polyimide resin (I) can be adjusted to 45% by weight or more, preferably 45 to 90% by weight. The imide fraction means the ratio of the imide component in the polyimide resin. That is, by adjusting the imide fraction, the elastic modulus of the polyimide resin (I) can be easily adjusted to a desired value. Particularly, when the imide fraction is adjusted to 45% by weight or more, the distribution and ratio of the successive imide units introduced into the main chain are optimized to ensure that the polyimide resin (I) has excellent pliability and flexibility while retaining strength and thermal resistance.

The above-mentioned imide fraction is a value calculated from the charge amounts of the raw materials thereof, namely, the diisocyanate (a), the polyol (b), a later-described diamine compound (d) and the tetracarboxylic dianhydride (f), more specifically, a value calculated from the following equation ($\alpha$).

$$\text{Imide fraction (\%)} = [(W_{a'}+W_c+W_d)/W_{total}]\times 100 \quad \cdots \quad (\alpha)$$

wherein, $W_{total}$ denotes $W_a+W_b+W_c+W_d$;
$W_a$ denotes diisocyanate charge amount (mol) $\times$ diisocyanate formula weight;
$W_b$ denotes polyol charge amount (mol) $\times$ polyol formula weight;
$W_c$ denotes diamine compound charge amount (mol) $\times$ diamine compound formula weight;
$W_d$ denotes tetracarboxylic dianhydride charge amount (mol) $\times$tetracarboxylic dianhydride formula weight; and
$W_{a'}$ denotes [diisocyanate charge amount (mol) - polyol charge amount (mol)] $\times$ diisocyanate formula weight.

A harder polyimide resin (I) can be obtained as the urethane prepolymer (c) has a smaller weight average molecular weight in the above-mentioned range. In contrast, when the molecular weight thereof is smaller than 300, the polyimide resin (I) becomes too hard and the pliability might be lowered. When it is over 50,000, the polyimide resin (I) becomes too soft, the strength and thermal resistance thereof might be lowered. These weight average molecular weights are obtained by measuring the urethane prepolymer (c) by GPC, and expressing the obtained measured value in terms of polystyrene.

<Reaction Formula (B)>

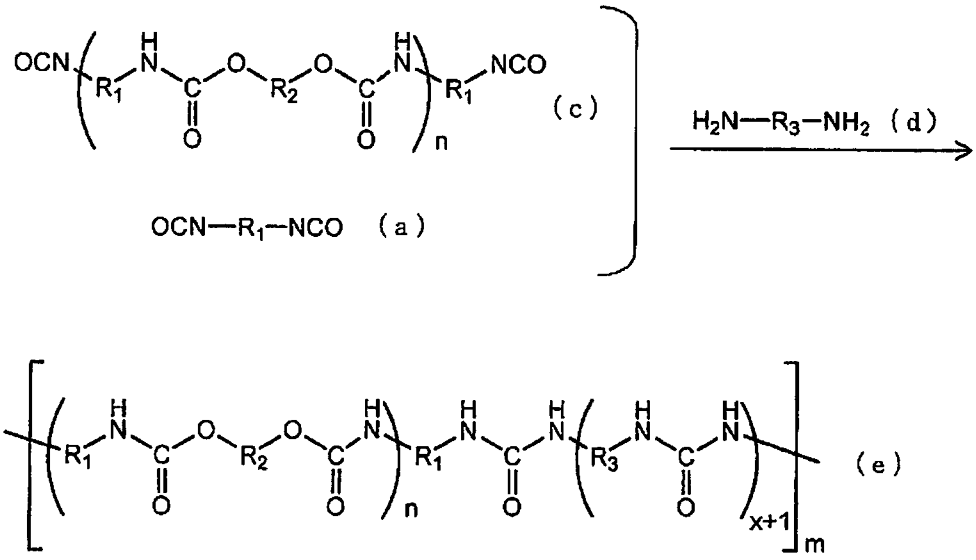

wherein, $R_1$ to $R_3$, n, m and x are the same as above.

<Synthesis of Polyurethane-Urea Compound (e)>

According to the reaction formula (B), a polyurethane-urea compound (e) as an imide precursor is synthesized by using the urethane prepolymer (c) obtained above and the diisocyanate (a). That is, the polyurethane-urea compound (e) is obtained by subjecting the urethane prepolymer (c) and the diisocyanate (a) to chain extension by urea bond using the diamine compound (d).

As described in the reaction formula (A), the diisocyanate (a) and the polyol (b) are mixed in a predetermined mol ratio, so that a free diisocyanate (a) exists in the reaction system. This free diisocyanate (a) can be used to efficiently synthesize the polyurethane-urea compound (e). In this case, though the reaction can proceed without adding the diisocyanate (a) in the reaction formula (B), the diisocyanate (a) may be added as required.

Examples of the diamine compound (d) include aromatic diamine compounds having a carbon number of 6 to 27 such as 1,4-diaminobenzene (also known as p-phenylenediamine, abbreviated as PPD), 1, 3-diaminobenzene (known as m-phenylenediamine, abbreviated as MPD), 2,4-diaminotoluene (known as 2,4-toluenediamine, abbreviated as 2,4-TDA), 4,4'-diaminodiphenylmethane (known as 4,4'-methylenedianiline, abbreviated as MDA), 4,4'-diaminodiphenylether (known as 4,4'-oxydianiline, abbreviated as ODA, DPE), 3,4'-diaminodiphenylether (known as 3,4'-oxydianiline, abbreviated as 3,4'-DPE), 3,3'-dimethyl-4,4'-diaminobiphenyl (known as o-tridine, abbreviated as TB), 2,2'-dimethyl-4,4'-diaminobiphenyl (known as m-tridine, abbreviated as m-TB), 2,2'-bis(trifluoromethyl)-4,4'-diaminobiphenyl (abbreviated as TFMB), 3,7-diamino-dimethyldibenzothiophen-5,5-dioxide (known as o-tridine sulfone, abbreviated as TSN), 4,4'-diaminobenzophenone, 3,3'-diaminobenzophenone, 4,4'-bis(4-aminophenyl) sulfide (known as 4,4'-thiodianiline, abbreviated as ASD), 4,4'-diaminodiphenyl sulfone (known as 4,4'-sulfonyldianiline, abbreviated as ASN), 4, 4'-diaminobenzanilide (abbreviated as DABA), 1,n-bis(4-aminophenoxy)alkane (n=3, 4 or 5, abbreviated as DAnMG), 1,3-bis (4-aminophenoxy)-2,2-dimethylpropane (abbreviated as DANPG), 1,2-bis[2-(4-aminophenoxy)ethoxy] ethane (abbreviated as DA3EG), 9,9-bis(4-aminophenyl)fluorene (abbreviated as FDA), 5(6)-amino-1-(4-aminomethyl)-1,3,3-trimethylindan, 1,4-bis(4-aminophenoxy)benzene (abbreviated as TPE-Q), 1,3-bis(4-aminophenoxy)benzene (known as resorcin oxydianiline, abbreviated as TPE-R), 1,3-bis(3-aminophenoxy)benzene (abbreviated as APB), 4,4'-bis(4-aminophenoxy)biphenyl-(abbreviated as BAPB),4,4'-bis(3-aminophenoxy)biphenyl, 2,2-bis(4-aminophenoxyphenyl)propane (abbreviated as BAPP), bis[4-(4-aminophenoxy)phenyl] sulfone (abbreviated as BAPS), bis[4-(3-aminophenoxy)phenyl] sulfone (abbreviated as BAPS-M), 2,2-bis[4-(4-aminophenoxy)phenyl]hexafluoropropane (abbreviated as HFBAPP), 3.3'-dicarboxy-4,4'-diaminodiphenylmethane (abbreviated as MBAA), 4,6-dihydroxy-1,3-phenylenediamine (known as 4,6-diaminoresorcin), 3,3'-dihydroxy-4,4'-diaminobiphenyl (known as 3,3'-dihydroxybendizine, abbreviated as HAB) and

3,3',4,4'-tetraaminobiphenyl (known as 3,3'-diaminobendizine, abbreviated as TAB); aliphatic or alicyclic diamine compounds having a carbon number of 6 to 24 such as 1 ,6-hexamethylenediamine (HMDA), 1,8-octamethylenediamine (OMDA), 1,9-nonamethylene diamine, 1,12-dodecamethylene diamine (DMDA), 1-amino-3-aminomethyl-3,5,5-trimethylcyclohexane (known as isophorondiamine), 4,4'-dicyclohexylmethanediamine and cyclohexanediamine; and silicone based diamine compounds such as 1,3-bis(3-aminopropyl)-1,1,3,3- tetramethyldisiloxane. These may be used either singly or as a mixture of two or more selected therefrom.
Especially, the use of 1,6-hexamethylenediamine (HMDA) provides the polyimide resin (I) having excellent strength.

The urethane prepolymer (c) and the diisocyanate (a) and the above-mentioned diamine compound (d) are mixed equimolecularly, preferably in an $NCO/NH_2$ ratio of approximately 1.0, and the mixture is then subjected to solution polymerization reaction or bulk polymerization reaction in an inert gas atmosphere such as argon gas, at room temperature to 100°C, preferably 50°C to 100°C, for about 2 to 30 hours.

Examples of solvents usable for the solution polymerization reaction include N,N-dimethylacetoamide, N-methyl-2-pyrrolidone (NMP), N-hexyl-2-pyrrolidone and 1,3-dimethyl-2-imidazolidone. Particularly preferred are N,N-dimethylacetoamide, N-methyl-2-pyrrolidone (NMP), N-hexyl-2-pyrrolidone and 1,3-dimethyl-2-imidazolidone. These solvents may be used either singly or as a mixture of two or more selected therefrom. It is preferable to use those after being subjected to dehydration process according to the usual method.

<Reaction Formula (c)>

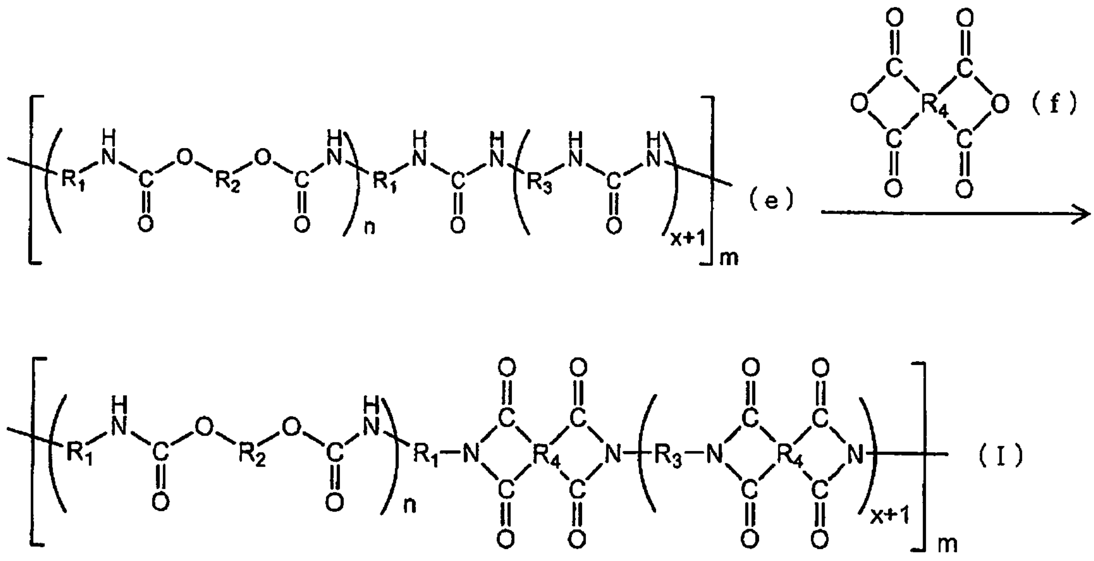
(e)
(f)
(I)

wherein, $R_1$ to $R_4$, n, m and x are the same as above.

<Synthesis of polyimide resin (I)>

According to the reaction formula (C), the polyimide resin (I) is synthesized using the polyurethane-urea compound (e) obtained above. That is, the polyimide resin (I) as a block copolymer is obtained by introducing an imide unit into a urea bond site by using tetracarboxylic dianhydride (f).

Examples of the tetracarboxylic dianhydride (f) include aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4'-tetracarboxylic dianhydride (DSDA), 4,4'-(2,2-hexafluoroisopropylidene) bis(phthalic anhydride) (6FDA) and m(p)-terphenyl-3,4,3',4'-tetracarboxylie dianhydride; and alicyclic tetracarboxylic dianhydrides having a carbon number of 4 to 6 such as cyclobutane-1,2,3,4 - tetracarboxylic dianhydride and 1-carboxymethyl-2,3,5-cyclopentanetricarboxylic-2,6: 3,5-dianhydride. These may be used either singly or as a mixture of two or more selected therefrom.

An imidization reaction between the polyurethane-urea compound (e) and the tetracarboxylic dianhydride (f) is carried out. The imidization reaction may be carried out in the presence or absence of a solvent. When the imidization reaction is carried out in the presence of a solvent, firstly, the polyurethane-urea compound (e) and the above-mentioned tetracarboxylic dianhydride (f) are added in a predetermined ratio into the solvent. The mixture is then allowed to react in an inert gas atmosphere such as argon gas, at 100°C to 300°C, preferably 135°C to 200°C, more preferably 150°C to 170°C, for about 1 to 10 hours, thereby obtaining a solution containing polyurethane amic acid (PUA) (a PUA solution) represented by the following formula (g).

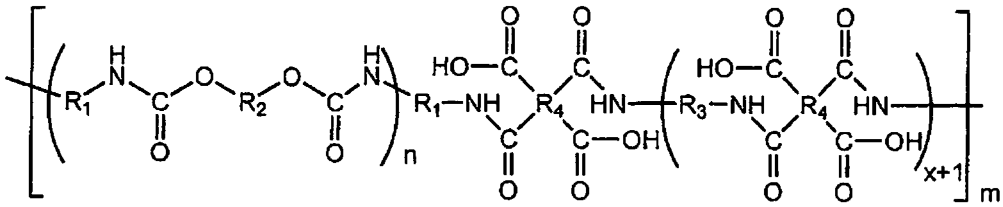

(g)

wherein, $R_1$ to $R_4$, n, m and x are the same as above.

Preferably, the polyurethane-urea compound (e) and the tetracarboxylic dianhydride (f) are mixed together so that the mixing ratio (mol) between the diamine compound (d) and the tetracarboxylic dianhydride (f) used to synthesize the polyurethane-urea compound (e), namely (d):(f), is 1:2 to 1:2.02. This ensures the introduction of the imide units into the urea bond site.

Examples of usable solvents include the same solvents as exemplified above in the solution polymerization reaction of the reaction formula (B). When the polyurethane-urea compound (e) is obtained by the solution polymerization reaction in the reaction formula (B), the imidization reaction may be carried out in the solvent.

Subsequently, the PUA solution thus obtained is poured into, for example, a centrifugal molding machine, and then molded into a sheet shape by centrifugal molding at 100°C to 300°C, preferably 135°C to 200°C, and more preferably 150°C to 170°C, at 100 to 2,000 rpm for 30 minutes to 2 hours. This results in a PUA sheet.

Then, the sheet-shaped polyimide resin polyurethane-imide, PUI) represented by the general formula (I) can be obtained by subjecting the PUA sheet to a heat treatment (dehydration condensation reaction). Preferably, the heat treatment is carried out under the conditions that the PUA sheet is not thermally decomposed, specifically under the reduced pressure conditions at 150°C to 450°C, preferably 150°C to 250°C for about 1 to 5 hours. The obtained sheet (PUI sheet) has a thickness of approximately 50 to 500 μm.

When the imidization reaction is carried out in the absence of a solvent, the reaction can also be carried out within an extrude provided with heating means having an exhaust system, besides any usual stirring tank reactor. Therefore, the obtained polyimide resin (I) can be extruded and directly molded into a film shape or a plate shape.

In the polyimide resin (I) thus obtained, the elastic modulus thereof can be easily adjusted to a desired value by adjusting the imide fraction described above. Specifically, the elastic modulus, namely, a storage elastic modulus E' at 50°C is $1.1 \times 10^8$ Pa or more, preferably $1.1 \times 10^8$ to $6.0 \times 10^9$ Pa. This ensures that the polyimide resin (I) has excellent pliability and flexibility while retaining strength and thermal resistance. The storage elastic modulus E' at 50°C is a value measured by a dynamic viscoelasticity measuring instrument as will be described later.

The reason why the polyimide resin (I) has excellent pliability and flexibility while retaining strength and thermal resistance seem to be as follows. That is, as described earlier, in the polyimide resin (I) of the invention, the successive imide units can be introduced into the main chain at a desired ratio (an imide fraction) while controlling the distribution thereof, so that the aggregation of hard segments composed of these imide units can become uniform and strong. Hence, the polyimide resin (I) forms a more uniform and stronger microphase separation structure, achieving high strength and high thermal resistance even when pliability and flexibility are imparted thereto by incorporating polyurethane as a pliable component.

The weight average molecular weight of the polyimide resin (I) is 10,000 to 1000,000, preferably 50,000 to 800,000, and more preferably 50,000 to 500,000. In contrast, the strength and thermal resistance thereof might be lowered when the above-mentioned molecular weight is smaller than 10,000, and the molding properties thereof might be lowered when it exceeds 1000,000. These weight average molecular weights are obtained by measuring the PUA solution by GPC, and expressing the obtained measured value in terms of polystyrene. The reason why the PUA solution

instead of the polyimide resin (I) is measured by GPC is that the polyimide resin (I) is insoluble in the solvent.

The polyimide resin of the invention can be easily molded by an injection molding machine, an extrusion molding machine and a blow molding machine which are usually employed. For example, the polyimide resin is applicable to sheets, films, belts, tubes, hoses, rollergears, packing materials, sound insulating materials, vibration isolating materials, boots, gaskets, belt laminate products, coating materials, separation membranes for pervaparation, optical non-linear materials, elastic fibers, piezoelectric elements, actuators, other various types of car pans, industrial mechanical parts and sports products. These applications are cited merely by way of example and without limitation.

The polyimide resin of the invention will be described in detail with reference to synthesis examples and examples, but it is to be understood that the invention is not limited to the following synthesis examples and examples.

The following two types of polyimide resins were used in the following examples.

**Synthesis Example 1**

A polyimide resin (1) was synthesized according to the following formulas.

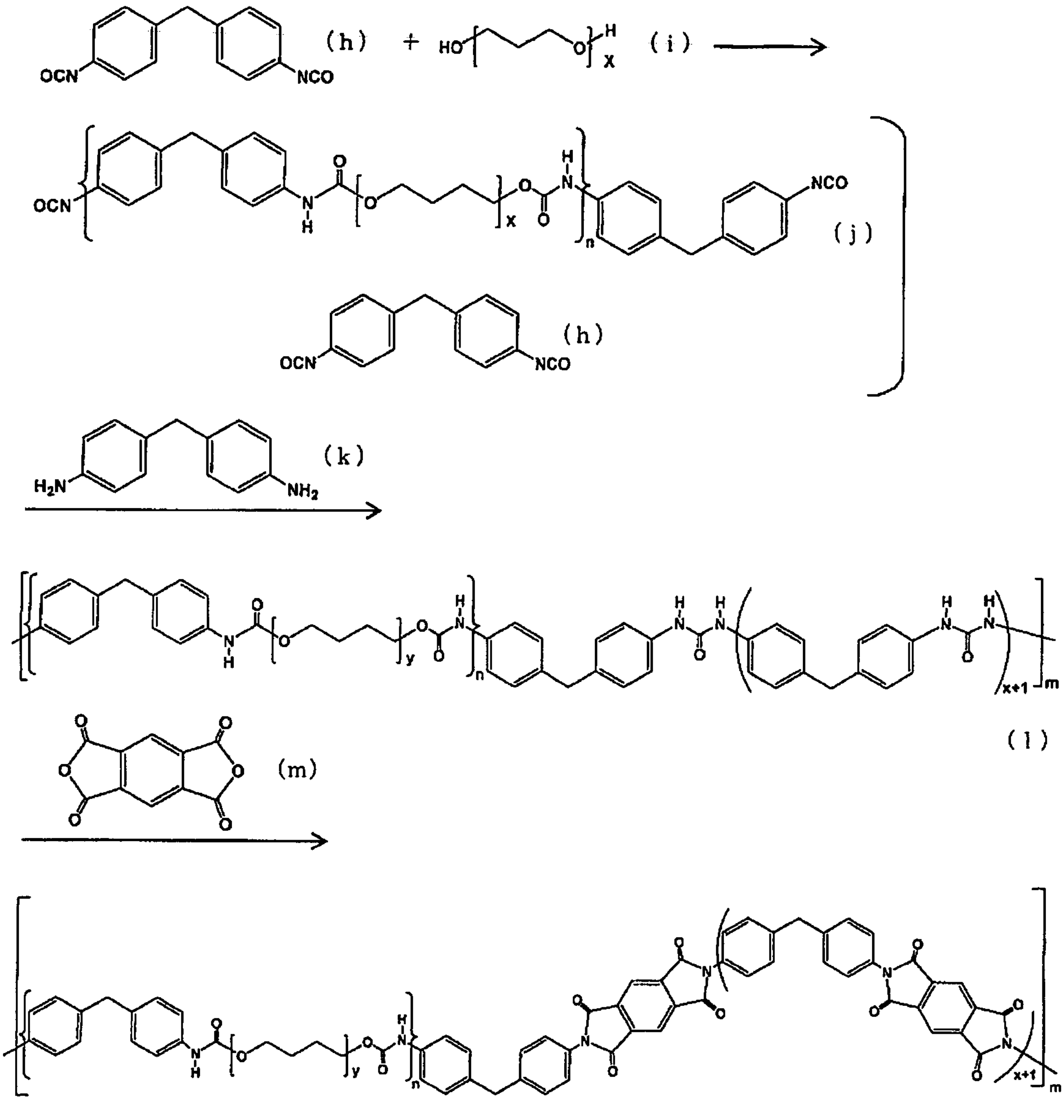

(h) (i) (j) (h) (k) (l) (m)

(1)

wherein, n represents an integer of 1 to 100, m represents an integer of 2 to 100, x represents an integer of 1 to 30, and

y is an integer of 10 to 100.

<Synthesis of Urethane Prepolymer (j)>

Firstly, 4,4'-diphenyl methane diisocyanate (MDI) (h), manufactured by Nippon Polyurethane Industry Co., Ltd., was vacuum distillated. Poly(oxytetramethylene)glycol (PTMG) (i), whose product name is "PTMG1000" having a weight average molecular weight of 1,000 manufactured by Hodogaya Chemical Co., Ltd., was vacuum dried at 80°C and 2 to 3 mmHg for 24 hours.

Subsequently, 40.7 g of the MDI (h) and 59.3 g of the PTMG (i) were put in a 500-ml-four-mouth separable flask provided with a stirrer and a gas introducing tube, in which the mol ratio (diisocyanate/polyol) was 2.7, and stirred in argon gas atmosphere at 80°C for 2 hours, thereby obtaining a reactant containing urethane prepolymer (j) having an isocyanate group at both ends of each molecular. The reactant was measured by GPC, and the weight average molecular weight of the urethane prepolymer (j) in terms of polystyrene was $0.67 \times 10^4$. The GPC measurement results confirmed the presence of the free MDI (h) in the reactant.

<Synthesis of Polyurethane-Urea Compound (1)>

A solution of 10 g of the above obtained reactant containing the urethane prepolymer (j) and the free MDI (h) in 60 ml of dehydrated N-methyl-2-pyrrolidone (NMP), and a solution of 2.056 g of 4,4'-diaminodiphenylmethane (MDA) (k) in 20 ml of dehydrated NMP were put in a 500-ml-four-mouth separable flask provided with a stirrer and a gas introducing tube, and stirred in argon gas atmosphere at room temperature (23°C) for 24 hours, thereby obtaining a solution of a polyurethane-urea compound (1).

<Synthesis of Polyimide Resin (1)>

Into the solution of the polyurethane-urea compound (1) obtained above, 4.524 g of pyromellitic dianhydride (PMDA) (m) was added and stirred in argon gas atmosphere at 150°C for 2 hours, thereby obtaining a polyurethane amic acid (PUA) solution. The PUA solution was then poured into a centrifugal molding machine and subjected to centrifugal molding at 150°C and 1,000 rpm for 1 hour, thereby obtaining a PUA sheet. The PUA sheet was then heat treated in a vacuum desiccator at 200°C for 2 hours (dehydration condensation reaction), thereby obtaining a sheet-shaped polyimide resin (1) (a PUI sheet) having a thickness of 100 $\mu$m (52% by weight of imide fraction). The visual observation of the PUI sheet confirmed the absence of warp. This imide fraction was a value calculated from the above-mentioned formula ($\alpha$).

The IR spectrum of the obtained polyimide resin (1) was measured by KBr method. The result is shown in Fig. 1. As apparent from Fig. 1, the absorption derived from the imide ring was observed at 1780 $cm^{-1}$, 1720 $cm^{-1}$ and 1380 $cm^{-1}$.

**Synthesis Example 2**

A reactant containing urethane prepolymer (j) having a weight average molecular weight of $1.0 \times 10^4$ was obtained in the same manner as in Synthesis Example 1, except to use 36.0 g instead of 40.7 g of the MDI (h), and 64.0 g instead of 59.3 g of the PTMG (i), in which the mol ratio (diisocyanate/polyol) was 2.2. The presence of the free MDI (h) in the obtained reactant was confirmed in the same manner as in Synthesis Example 1. Subsequently, a solution of the polyurethane-urea compound (1) was obtained in the same manner as in Synthesis Example 1, except to use 1.586 g instead of 2.056 g of the MDA (k).

A sheet-shaped polyimide resin (2) (a PUI sheet) having a thickness of 100 $\mu$m (47% by weight of imide fraction) was obtained in the same manner as in Synthesis Example 1, except to add 3.49 g instead of 4.524 g of the PMDA (m) into the solution of the polyurethane-urea compound (1). The visual observation of the PUI sheet confirmed the absence of warp. The IR spectrum of the polyimide resin (2) was measured in the same manner as in Synthesis Example 1. The result is shown in Fig. 2.

As apparent from Fig. 2, the absorption derived from the imide ring was observed at 1780 $cm^{-1}$, 1720 $cm^{-1}$ and 1380 $cm^{-1}$.

These polyimide resins (1) and (2) obtained above are presented in Table 1.

[Table 1]

| Polyimide resin | (1) | (2) |
|---|---|---|
| Weight average molecular weight (Mw) of methane prepolymer | $0.67 \times 10^4$ | $1.0 \times 10^4$ |

(continued)

| Polyimide resin | (1) | (2) |
|---|---|---|
| Imide fraction (% by weight) | 52 | 47 |

**Example 1**

The PUI sheets of the polyimide resins (1) and (2) obtained in Synthesis Examples 1 and 2, respectively, were subjected to a tensile test and a dynamic viscoelasticity test. Their respective test methods are as follows, and the test results thereof are presented in Table 2 and Figs. 3 and 4.

<Tensile Test Method>

Each of these PUI sheets was punched out with a No. 3 dumbbell, and the stress, breaking strength (TB) and elongation (EB) thereof were measured under the conditions of an intergauge distance of 20 mm/min and 500 mm/min according to JIS K6251.

<Dynamic Viscoelasticity Test Method>

Measurements were carried out using a dynamic viscoelasticity measuring instrument manufactured by Seiko Instruments Inc., at 20 Hz and 5°C/min in-the step of raising temperature from -100°C to 400°C.

**Comparative Example 1**

A PUA sheet was obtained in the same manner as in Example 1 except that a "U-VARNISH-A" manufactured by Ube Industries, Ltd. was used as a PUA solution. In the same manner as in Example 1, the PUA sheet was heat treated (dehydration condensation reaction) to obtain a PUI sheet having a thickness of 100 μm. The PUI sheet was subjected to the same tensile test and the same dynamic viscoelasticity test as in Example 1. The results are presented in Table 2.

[Table 2]

| Polyimide resin | (1) | (2) | Comparative Example 1 |
|---|---|---|---|
| Weight average molecular weight (Mw) of urethane prepolymer | $0.67\times10^4$ | $1.0\times10^4$ | - |
| Imide fraction (% by weight) | 52 | 47 | - |
| Breaking strength TB (MPa) | 45 | 43 | 160 |
| Elongation EB (%) | 250 | 310 | 70 |
| Storage elastic modulus at 50°C E' (Pa) | $3.4\times10^8$ | $1.1\times10^8$ | $1.89\times10^9$ |
| Presence/absence of warp | Absence | Absence | Presence |

It can be seen from Tables 1 and 2 that in the polyimide resins (1) and (2), each containing polyurethane as the elastomer component, the control of the molecular weight of urethane prepolymer enables successive imide units to be introduced into the main chain at a desired ratio (imide fraction), while controlling the distribution thereof. It can also be seen that the storage elastic modulus E' at 50°C can be adjusted by adjusting the imide fraction.

Further, it can be seen from Table 2 and Fig. 3 that the polyimide resins (1) and (2) have excellent physical strengths (stress strength and break strength) and excellent pliability (stretch, and the presence/absence of warp). The above results show the expectation that the polyimide resins (1) and (2) also have excellent flexibility. Furthermore, it can be seen from Fig. 4 that the polyimide resins (1) and (2) have excellent thermal resistance. In contrast, the polyimide resin of Comparative Example 1 exhibited excellent break strength, however, exhibited remarkably lower pliability (stretch, and the presence/absence of warp) than the polyimide resin (1) or (2).

## Claims

1. A polyimide resin represented by the following general formula (I):

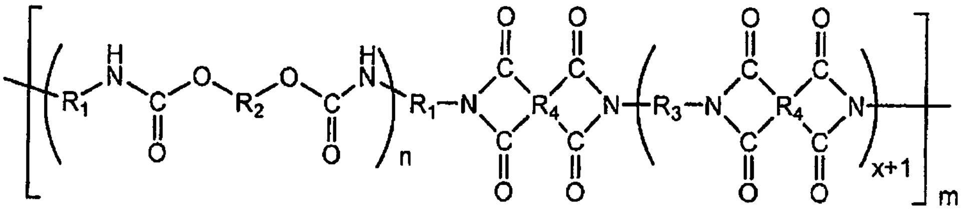

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; m represents an integer of 2 to 100; and x represents an integer of 1 to 50.

2. The polyimide resin according to claim 1, wherein in the general formula (I), $R_1$ represents the group $R_1$ in a diisocyanate OCN-$R_1$-NCO capable of forming a urethane prepolymer together with a polyol, and $R_2$ represents the group $R_2$ in a polyol HO-$R_2$ -OH capable of forming a urethane prepolymer together with a diisocyanate.

3. The polyimide resin according to claim 1, wherein in the general formula (I) $R_3$ represents the group $R_3$ in at least one kind of diamine compound $H_2N$-$R_3$-$NH_2$ selected from aromatic diamine compounds having a carbon number of 6 to 27, aliphatic diamine compounds having a carbon number of 6 to 24, and alicyclic diamine compounds having a carbon number of 6 to 24, each of which is capable of chain extending a urethane prepolymer and a diisocyanate by urea bond formation

4. The polyimide resin according to claim 1, wherein in the general formula (I), the $R_4$ is a residue of at least one kind of tetracarboxylic dianhydride selected from aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4'-tetracarboxylic dianhydride (DSDA), 4,4'-(2,2-hexafluoroisopropylidene)bis(phthalic anhydride) (6FDA) and m(p)-terphenyl-3,4,3',4'-tetracarboxylic dianhydride; and alicyclic tetracarboxylic dianhydrides having a carbon number of 4 to 6 selected from cyclobutane-1,2,3,4-tetracarboxylic dianhydride and 1-carboxymethyl-2,3,5-cyclopentanetricarboxylic-2,6:3,5-dianhydride, each of which is capable of introducing an imide unit into a urea bond site.

5. The polyimide resin according to claim 1, wherein the polyimide resin is a block copolymer in which urethane prepolymer having an isocyanate group at both ends of each molecule obtained from diisocyanate and polyol, and diisocyanate are chain extended with a diamine compound by urea bond, and an imide unit is introduced into a urea bond site by using tetracarboxylic dianhydride.

6. The polyimide resin according to claim 5, wherein the mol ratio of the diisocyanate to polyol (diisocyanate/polyol) is 2 or more.

7. The polyimide resin according to claim 5, wherein the weight average molecular weight of the urethane prepolymer is 300 to 50,000.

8. The polyimide resin according to claim 5, wherein the diamine compound is 1,6-hexamethylenediamine.

9. The polyimide resin according to claim 1, having an imide fraction of 45% by weight or more.

10. The polyimide resin according to claim 1, wherein the storage elastic modulus E' at 50°C is $1.1 \times 10^8$ Pa or more.

11. A polyimide resin represented by the following formula (1):

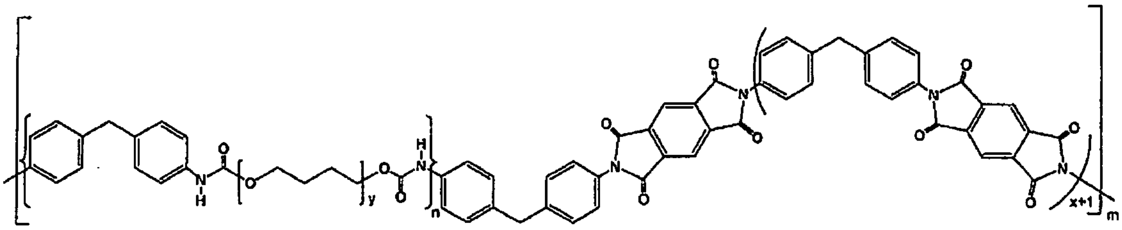

(1)

wherein, n represents an integer of 1 to 100; m represents an integer of 2 to 100; x represents an integer of 1 to 30; and y represents an integer of 10 to 100.

**Patentansprüche**

1. Polyimidharz, repräsentiert durch die folgend allgemeine Formel (I):

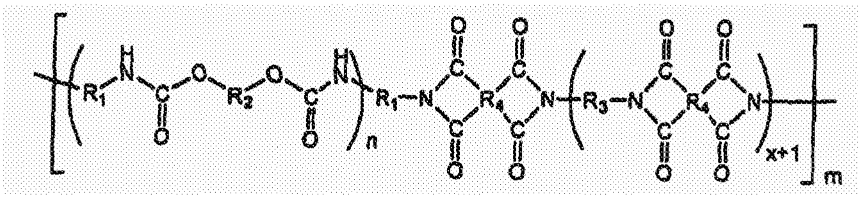

(I)

wobei $R_1$ eine zweiwertige organische Gruppe mit einem aromatischen Ring oder einem aliphatischen Ring repräsentiert; $R_2$ eine zweiwertige organische Gruppe mit einer gewichtsgemittelten Molekülmasse von 100 bis 10.000 repräsentiert; $R_3$ eine zweiwertige organische Gruppe mit einem aromatischen Ring, einem aliphatischen Ring oder einer aliphatischen Kette repräsentiert; $R_4$ eine vierwertige organische Gruppe mit 4 oder mehr Kohlenstoffatomen repräsentiert; n eine ganze Zahl von 1 bis 100 repräsentiert; m eine ganze Zahl von 2 bis 100 repräsentiert; und x eine ganze Zahl von 1 bis 50 repräsentiert.

2. Polyimidharz nach Anspruch 1, wobei $R_1$ in der allgemeinen Formel (1) die Gruppe $R_1$ in einem Diisocyanat OCN-$R_1$-NCO repräsentiert, die ein Urethan-Vorpolymer zusammen mit einem Polyol bilden kahn, und $R_2$ die Gruppe $R_2$ in einem Polyol HO- $R_2$-OH repräsentiert, die ein Urethan-Vorpolymer zusammen mit einem Diisocyanat bilden kann.

3. Polyimideharz nach Anspruch 1, wobei $R_3$ in der allgemeinen Formel (I) die Gruμpe $R_3$ in wenigstens einer Art von Diaminverbindung $H_2N$-$R_3$-$NH_2$ repräsentiert, ausgewählt aus aromatischen Diaminverbindungen mit einer Kohlenstoffzahl von 6 bis 27, aliphatischen Diaminverbindungen mit einer Kohlenstoffzahl von 6 bis 24 und alicyclischen Diaminverbindungen mit einer Kohlenstoffzahl von 6 bis die jeweils die Kette eines Urethan-Vorpolymers und eines Diisocyanats durch Bilden einer Harnstoffbindung verlängern können.

4. Polyimidharz nach Anspruch 1, wobei $R_4$ in der allgemeinen Formel (I) ein Rest von wenigstens einer Art von Tetracarbonsäuredianhydrid ist, ausgewählt aus aromatischen Tetracarbonsäuredianhydriden mit einer Kohlenstoffzahl von 6 bis 18 wie z.B. Pyromellitsäuredianhydrid (PMDA), Oxydiphthalsäuredianhydrid (ODPA), Biphenyl-3,4,3'4'-Tetracarbonsäuredianhydrid (BPDA), Benzophenon-3,4,3',4'-Tetracarbonsäuredianhydrid (BTDA), Diphenylsulfon-3,4,3',4'-Tetracarbonsäuredianhydrid (DSDA), 4,4'-(2,2-Hexafluoroisopropyliden)bis(phthalsäureanhydrid) (6FDA) und m(p)-Terphenyl-3,4,3',4'-Tetracarbonsäuredianhydrid; und alicyclischen Tetracarbonsäuredianhydriden mit einer Kohlenstoffzahl von 4 bis 6, ausgewählt aus Cyclobutan-1,2,3,4-Tetracarbonsäuredianhydrid und 1-Carboxymethyl-2,3,5-cyclopentantricarbonsäure-2,6:3,5-dianhydrid, die jeweils eine Imideinheit in eine Harnstoffbindungsstelle einführen können.

5. Polyimidharz nach Anspruch 1, wobei der Polyimidharz ein Blockcopolymer ist, in dem Urethan-Vorpolymer mit einer Isocyanatgruppe an beiden Enden jedes von Diisocyanat und Polyol erhaltenen Moleküls und Diisocyanat

durch Harnstoffbindung mit einer Diaminverbindung kettenverlängert sind und eine Imideinheit durch Verwenden von Tetracarbonsäuredianhydrid in eine Harnstoffbindungsstelle eingeführt wird.

**6.** Polyimidharz nach Anspruch 5, wobei das Molverhältnis zwischen dem Diisocyanat und Polyol (Diisocyanat/Polyol) 2 oder mehr beträgt.

**7.** Polyimidharz nach Anspruch 5, wobei die gewichtsgemittelte Molekülmasse des Urethan-Vorpolymers 300 bis 50.000 beträgt.

**8.** Polyimidharz nach Anspruch 5, wobei die Diaminverbindung 1,6-Hexamethylendiamin ist.

**9.** Polyimidharz nach Anspruch 1 mit einer Imidfraktion von 45 Gew.-% oder mehr.

**10.** Polyimidharz nach Anspruch 1, wobei das elastische Lagerungsmodul E' bei 50°C 1,1 x $10^8$ Pa oder mehr beträgt.

**11.** Polyimideharz, repräsentiert durch die folgende Formel (I):

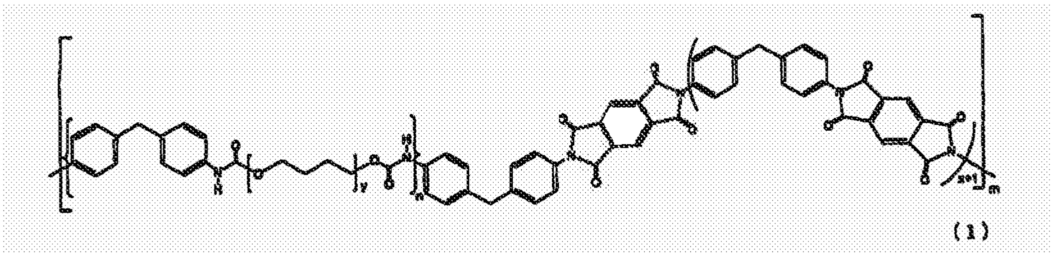

(I)

wobei n eine ganze Zahl von 1 bis 100 repräsentiert; m eine ganze Zahl von 2 bis 100 repräsentiert; x eine ganze Zahl von 1 bis 30 repräsentiert; und y eine ganze Zahl von 10 bis 100 repräsentiert.

## Revendications

**1.** Résine polyimide représentée par la formule générale (I) suivante :

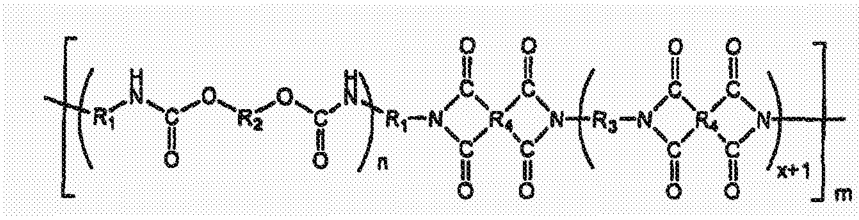

(I)

dans laquelle $R_1$ représente un groupement organique divalent ayant un cycle aromatique ou un cycle aliphatique ; $R_2$ représente un groupement organique divalent ayant un poids moléculaire moyen en poids allant de 100 à 10 000 ; $R_3$ représente un groupement organique divalent ayant un cycle aromatique, un cycle aliphatique ou une chaîne aliphatique ; $R_4$ représente un groupement organique tétravalent ayant 4, ou plus, atomes de carbone ; n représente un nombre entier allant de 1 à 100 ; m représente un nombre entier allant de 2 à 100 ; et x représente un nombre entier allant de 1 à 50.

**2.** Résine polyimide selon la revendication 1, dans laquelle dans la formule générale (I), $R_1$ représente le groupement $R_1$ dans un diisocyanate OCN-$R_1$-NCO capable de former un pré-polymère d'uréthane conjointement avec un polyol, et $R_2$ représente le groupement $R_2$ dans un polyol HO-$R_2$-OH capable de former un pré-polymère d'uréthane conjointement avec un diisocyanate.

**3.** Résine polyimide selon la revendication 1, dans laquelle dans la formule générale (I), $R_3$ représente le groupement $R_3$ dans au moins un type de composé de diamine $H_2N$-$R_3$-$NH_2$ choisi parmi les composés de diamine aromatiques ayant un nombre de carbones allant de 6 à 27, les composés de diamine aliphatiques ayant un nombre de carbones

allant de 6 à 24, et les composés de diamine alicycliques ayant un nombre de carbones allant de 6 à 24, chacun d'entre eux étant capable d'une extension de chaîne d'un pré-polymère d'uréthane et d'un diisocyanate par formation de liaisons urée.

4. Résine polyimide selon la revendication 1, dans laquelle dans la formule générale (I), $R_4$ est un reste d'au moins un type de dianhydride tétracarboxylique choisi parmi les dianhydrides tétracarboxyliques aromatiques ayant un nombre de carbones allant de 6 à 18, tels que le dianhydride pyromellitique (PMDA), le dianhydride oxydiphtalique (ODPA), le dianhydride biphényl-3,4,3'4'-tétracarboxylique (BPDA), le dianhydride benzophénone-3,4,3',4-tétracarboxylique (BTDA), le dianhydride diphénylsulfone-3,4,3'4'-tétracarboxylique (DSDA), le 4,4'-(2,2-hexafluoroisopropylidéne)bis(anhydride phtalique) (6FDA), et le dianhydride m(p)-terphényl-3,4,3',4'-tétracarboxylique ; et les dianhydrides tétracarboxyliques alicycliques ayant un nombre de carbones allant de 4 à 6 choisis parmi le dianhydride cyclobutane-1,2,3,4-tétracarboxylique et le 2,6:3,5-dianhydride 1-carboxyméthyl-2,3,5-cyclopentanetricarboxylique, chacun d'entre eux étant capable d'introduire un motif imide dans un site de liaison urée.

5. Résine polyimide selon la revendication 1, dans laquelle la résine polyimide est un copolymère bloc dans lequel un pré-polymère d'uréthane ayant un groupement isocyanate aux deux extrémités de chaque molécule obtenu à partir de diisocyanate et de polyol, et un diisocyanate subissent une extension de chaîne avec un composé de diamine via une liaison urée, et un motif imide est introduit dans un site de liaison urée en utilisant du dianhydride tétracarboxylique.

6. Résine polyimide selon la revendication 5, dans laquelle le rapport molaire du diisocyanate au polyol (diisocyanate/polyol) est de 2 ou plus.

7. Résine polyimide selon la revendication 5, dans laquelle le poids moléculaire moyen en poids du pré-polymère d'uréthane va de 300 à 50 000.

8. Résine polyimide selon la revendication 5, dans laquelle le composé de diamine est la 1,6-hexaméthylènediamine.

9. Résine polyimide selon la revendication 1, ayant une fraction imide de 45% en poids ou plus.

10. Résine polyamide selon la revendication 1, dans laquelle le module de conservation en traction E' à 50°C est de $1,1 \times 10^8$ Pa ou plus.

11. Résine polyimide représentée par la formule (I) suivante :

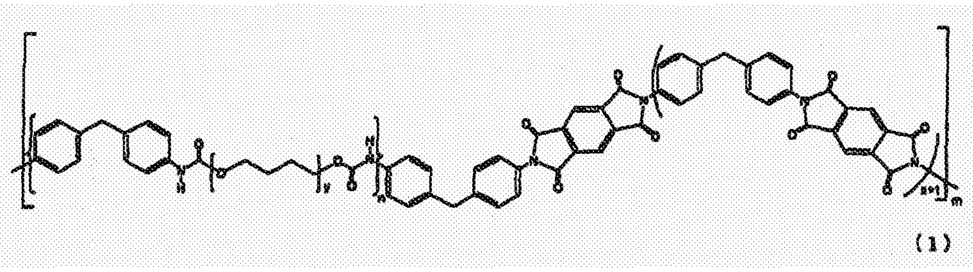

(1)

dans laquelle n représente un nombre entier allant de 1 à 100 ; m représente un nombre entier allant de 2 à 100 ; x représente un nombre entier allant de 1 à 30 ; et y représente un nombre entier allant de 10 à 100.

Fig. 1

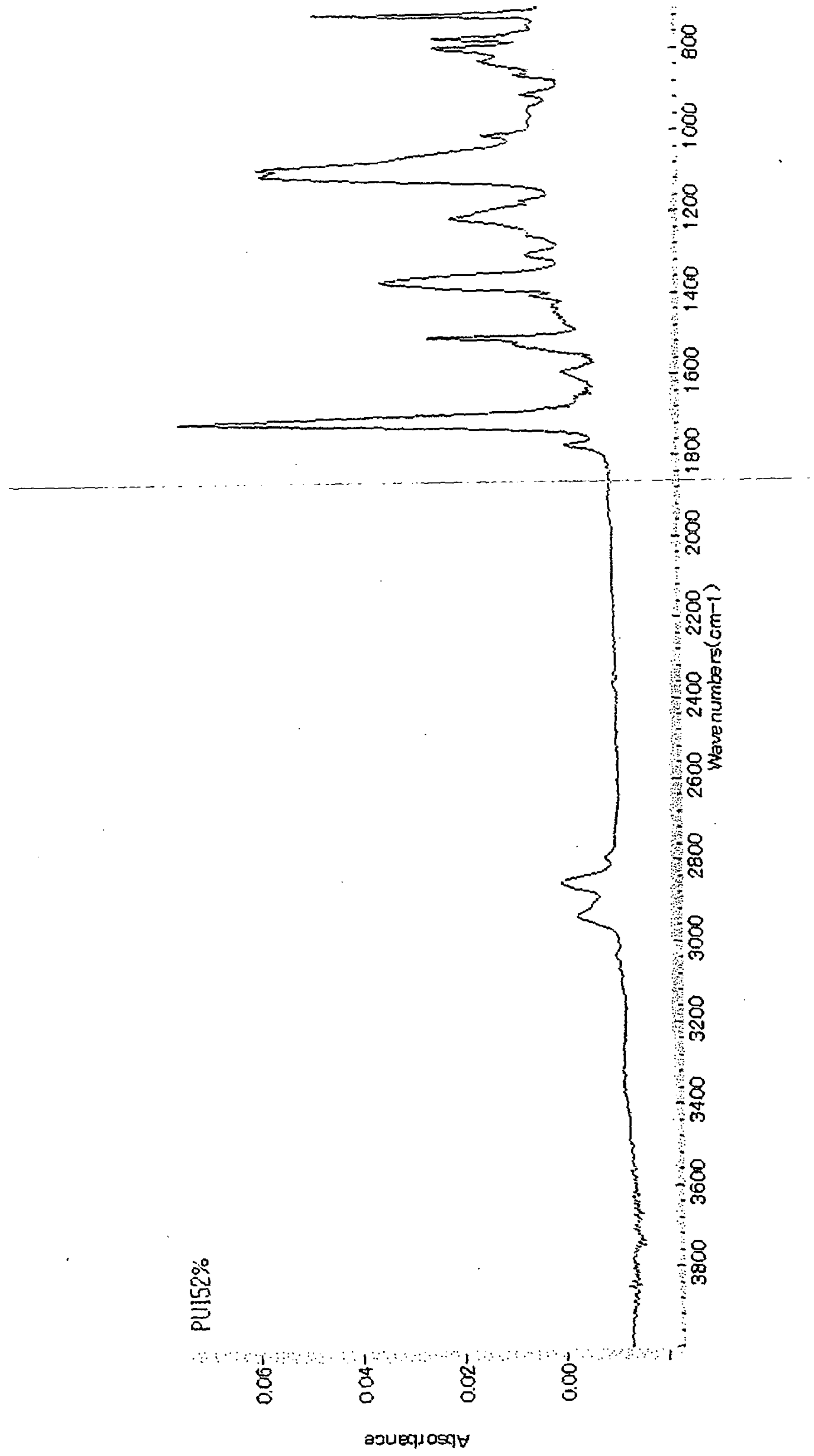
PU152%
Absorbance
0.06
0.04
0.02
0.00
3800
3600
3400
3200
3000
2800
2600
2400
2200
2000
1800
1600
1400
1200
1000
800
Wavenumbers(cm-1)

Fig. 2

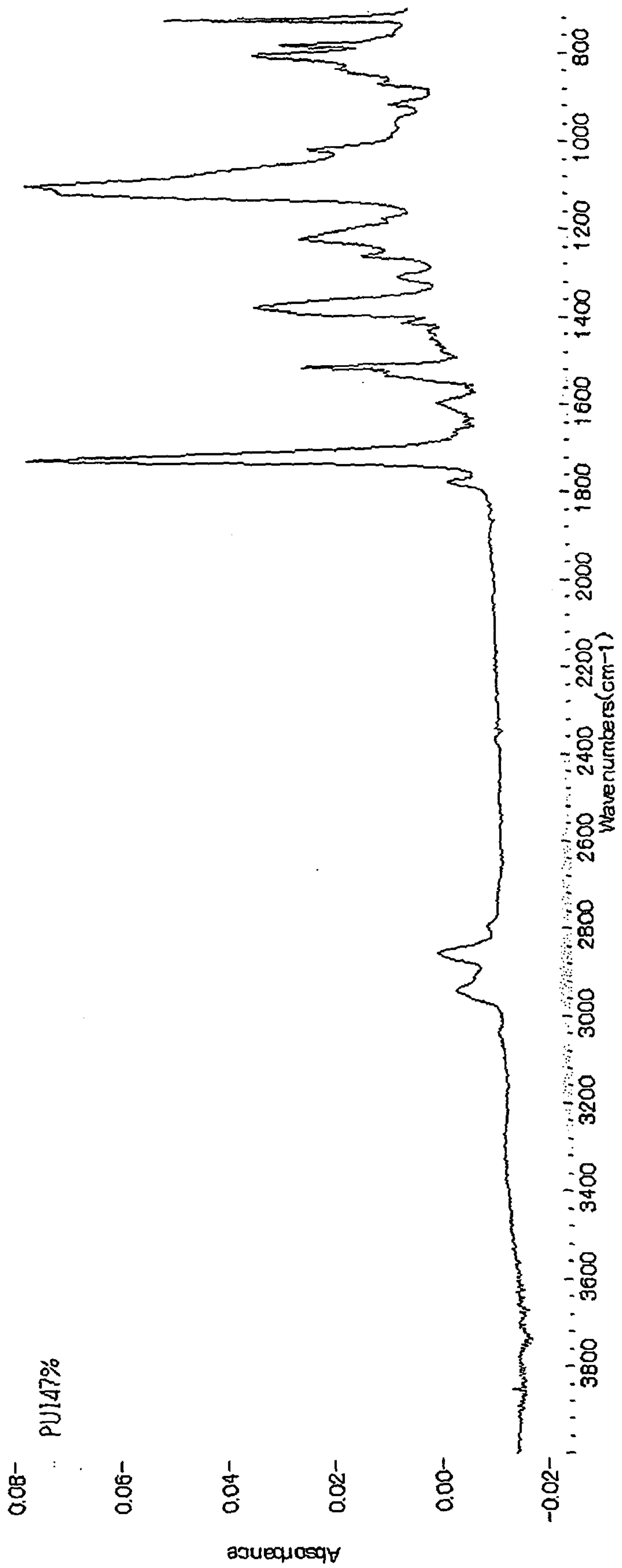
PU147%
Absorbance
0.08
0.06
0.04
0.02
0.00
-0.02
Wavenumbers(cm-1)
3800
3600
3400
3200
3000
2800
2600
2400
2200
2000
1800
1600
1400
1200
1000
800

Fig. 3

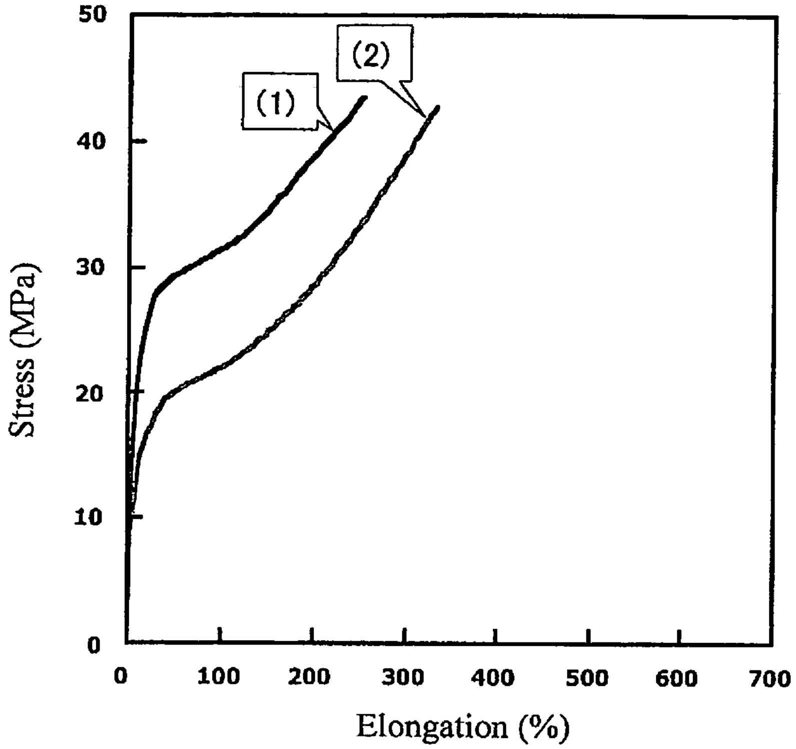
(1)
(2)
Stress (MPa)
50
40
30
20
10
0
0
100
200
300
400
500
600
700
Elongation (%)

Fig. 4

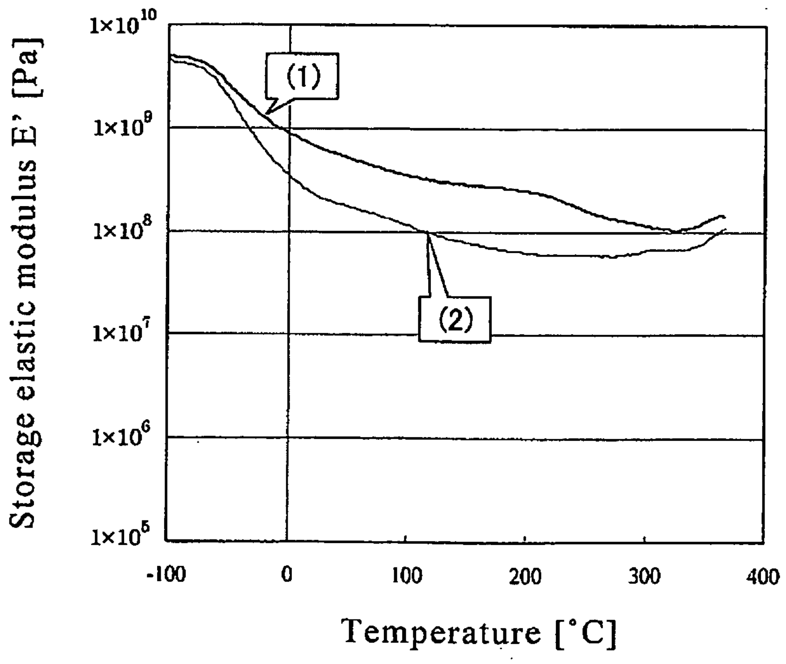
(1)
(2)
Storage elastic modulus E' [Pa]
$1\times10^{10}$
$1\times10^{9}$
$1\times10^{8}$
$1\times10^{7}$
$1\times10^{6}$
$1\times10^{5}$
-100
0
100
200
300
400
Temperature [°C]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006133510 A
- JP 2006243146 A
- JP 2006104462 A
- JP 2005036025 A
- EP 1048680 A